# EUROPEAN PATENT APPLICATION

(11) **EP 4 685 732 A1**
(43) Date of publication of application: **28.01.2026**
(21) Application number: 24190366.5
(22) Date of filing: 23.07.2024
(51) Int. Cl.: G06T 3/4038, G06T 5/50

(54) **METHOD FOR GENERATING AN ENVIRONMENT REPRESENTATION OF THE SURROUNDINGS OF A VEHICLE**

(71) Applicant: AUMOVIO Autonomous Mobility Germany GmbH, 85057 Ingolstadt (DE)
(72) Inventor: R, Jerry Samuel, 560100 Bangalore (IN); Behera, Shreetam, 560100 Bangalore (IN); Makkar, Deepanshu, 88131 Lindau (DE); Dr. Friebe, Markus, 88131 Lindau (DE)
(74) Representative: Aumovio Corporation

(57) **Abstract**

The invention relates to a computer-implemented method for generating a representation of the environment surrounding a vehicle (1) based on images provided by multiple cameras (C1, C2, C3, C4) of the vehicle (1), the cameras (C1, C2, C3, C4) being arranged at the vehicle (1) in a distributed manner such that the recording areas (R) of neighboring cameras (C1, C2, C3, C4) at least partially overlap.

## Description

The present invention generally relates to the field of environment representations in automotive applications. More specifically, the invention relates to a method for generating an environment representation by stitching single images and correcting the brightness of the resulting composite image by using an adaptive sample grid.

Known surround view systems stitch images captured by different cameras of the car and project the resulting composite image onto a projection surface. The projection surface can be a bowl-shaped surface or the ground plane (bird's-eye view). The composite image may comprise overlapping regions in which image information from different cameras are available.

The exposure of the images captured by different cameras vary because of different factors, for example because of distinct camera settings, varying lighting conditions and individual camera limitations in dynamic scenarios. Consequently, this leads to brightness differences of images provided by different cameras in the overlapping regions. When stitching those images, the resulting composite image comprises artifacts and texture inconsistencies which cannot be removed by known correction techniques.

It is an objective of the embodiments of the invention to disclose a method for generating an environment representation of the surroundings of a vehicle which reduces artifacts and texture inconsistencies in the composite image thereby leading to a visually pleasing and homogenous environment representation.

The objective is solved by the features of the independent claims. Preferred embodiments are given in the dependent claims. If not explicitly indicated otherwise, embodiments of the invention can be freely combined with each other.

According to an aspect, a computer-implemented method for generating a representation of the environment surrounding a vehicle based on images provided by multiple cameras of the vehicle is disclosed. The cameras are arranged at the vehicle in a distributed manner such that the recording areas are different but the recording areas of neighboring cameras at least partially overlap. The method comprises the following steps:
First, images are captured by the cameras of the vehicle. Thereby, images of different portions of the surroundings of the vehicle are obtained.

Said captured images are stitched together to build a composite image. For example, the images captured by the cameras at a certain point of time are stitched together to illustrate the environment of the vehicle at said point of time. The composite image comprises at least one overlapping region in which a portion of an image provided by a first camera overlaps with a portion of an image provided by a second camera.

A free space area is determined in the overlapping region. Said determination can be done based on the single images provided by the respective cameras or based on the composite image. For example, said determination of free space can be obtained by semantic segmentation information associated to the images or the composite image.

A sampling grid is arranged in the free space area such that the overlap between the sampling grid and the free space area is maximized. This means that either the sampling grid completely lies within the free space area or - if a complete arrangement in the free space area is not possible - the sampling grid is arranged such that the portion of the sampling grid being arranged in the free space area is maximized.

After arranging the sampling grid, image information from the images provided by the first and second camera are captured in the overlapping region based on the sampling grid, thereby obtaining image samples.

Finally, the images provided by the first and second cameras are modified by at least partially adapting the brightness of the images based on the image samples.

The proposed method is advantageous because by adapting the position of the sampling grid within the overlapping region, brightness differences resulting from image inhomogeneities in the region where the sampling grid is initially located (in a fixed sampling grid scenario) can be prevented. This leads to reduced artifacts and improved texture consistency in the modified composite image.

According to an embodiment, the free space area is determined based on semantic segmentation information. Said semantic segmentation information may be provided by a semantic segmentation module, specifically an artificial neural network of the vehicle being trained to provide semantic segmentation information. By using semantic segmentation information associated with the image portions in the overlapping region, a free space area can be determined and the sampling grid can be placed according to said free space area.

According to an embodiment, the free space area is determined separately for images of first and second camera. In other words, the free space area is not determined for the composite image but for the single images before the stitching process. Thereby, semantic segmentation information associated to the single images can be directly used for determining the free space area.

According to an embodiment, the step of arranging the sample grid comprises an initial placement of the sampling grid in the overlapping region. Said initial placement may be done randomly, at a fixed portion of the overlapping region or based on a heuristic approach.

According to an embodiment, after initial placement, it is checked if the sampling grid is completely located in the free space area and, if not, it is checked if the portion of the sampling grid lying in the free space area can be maximized by shifting the sampling grid. Thereby it is reviewed if the placement of the sampling grid can be improved.

According to an embodiment, after the initial placement of the sampling grid in the overlapping region, the step of arranging the sampling grid comprises shifting the sampling grid in the overlapping region in order to minimize the portion of the sampling grid outside the free space area. Thereby the placement of the sampling grid for taking image samples is improved.

According to an embodiment, the image samples include brightness information of image pixel covered by the sampling grid. Based on the brightness information of image pixel covered by the sampling grid, image harmonization and brightness correction in the overlapping area can be improved.

According to an embodiment, the image samples include alpha values associated to the image pixels covered by the sampling grid, said alpha values being numeric values indicating the transparency of the image pixels. Based on said alpha values, the transparency of the images in the overlapping region can be adapted.

According to an embodiment, the step of modifying the images comprises alpha-blending. Thereby, the transitions between different images in the overlapping regions and in areas neighboring the overlapping regions can be improved.

According to a further aspect, a system for generating a representation of the environment surrounding a vehicle is disclosed. The system comprises multiple cameras for capturing images of the environment surrounding the vehicle and a control unit configured to generate a representation of the environment based on the captured images. The system is configured to perform the following steps:
- Capturing images by the cameras of the vehicle;
- Stitching the images together to build a composite image, wherein the composite image comprises at least one overlapping region in which a portion of an image provided by a first camera overlaps with a portion of an image provided by a second camera;
- Determining a free space area in the overlapping region;
- Arranging a sampling grid in the free space area such that the overlap between the sampling grid and the free space area is maximized;
- Collecting image information from the images provided by the first and second camera in the overlapping region based on the sampling grid, thereby obtaining image samples;
- Modifying the images provided by the first and second cameras by at least partially adapting the brightness of the images based on the image samples.

According to an embodiment of the system, the system comprises at least four cameras for capturing the environment surrounding of the vehicle and the composite image is a 360° surround view. Thereby, the system can provide a surround view comprising multiple overlapping areas with improved image harmonization and brightness correction.

The term "vehicle" as used in the present disclosure may refer to a car, truck, bus or any other crafts.

The term "free space area" as used in the present disclosure refers to any area which is not occupied by an object. Specifically, free space area refers to a road area or drivable space area which is free of any object (like cars, curbstone etc.).

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:
- Fig. 1: schematically illustrates an example top view of a car with a surround view system comprising multiple cameras;
- Fig. 2: schematically illustrates an example top view of a car with an object limiting the free space area in an overlapping region of the recording areas of neighboring cameras and an initially placed sampling grid within said overlapping area;
- Fig. 3: schematically illustrates an example top view of a car according to Fig. 2 in which the sampling grid has been shifted in order to be totally placed within the free space area; and
- Fig. 4: shows a schematic block diagram illustrating the steps of a method for generating an environment representation of the surroundings of the vehicle.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

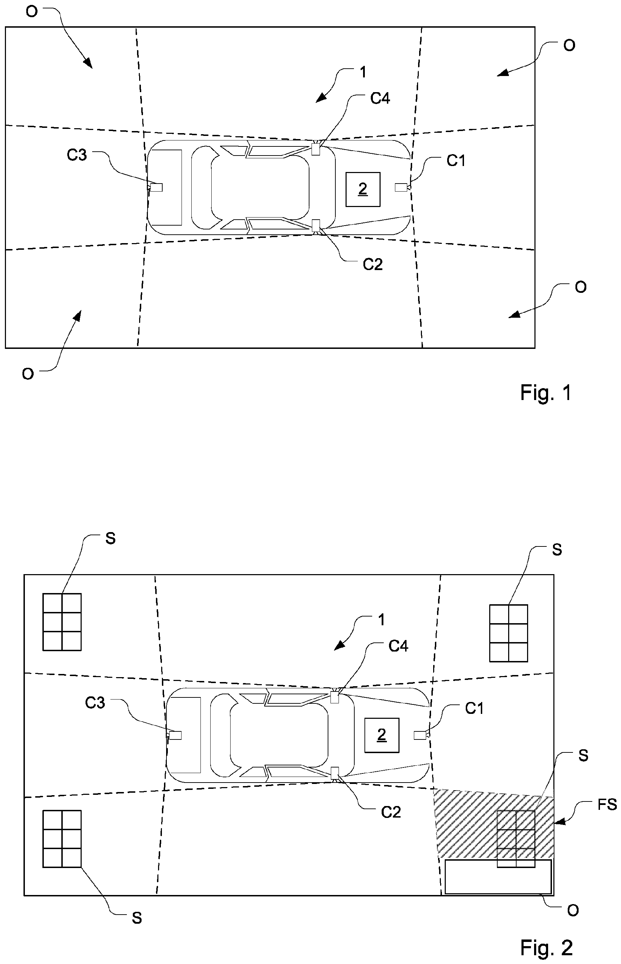

Fig. 1 shows a schematic illustration of a vehicle 1 comprising a surround view system. The vehicle 1 comprises multiple cameras C1, C2, C3, C4 which are arranged at the vehicle such that the recording areas of the cameras C1, C2, C3, C4 cover the whole of essentially the whole surroundings of the vehicle 1.

For example, a recording area of the first camera C1 covers the area in front of the vehicle 1, a recording area of the first camera C2 covers the area to the right of the vehicle 1 (viewed in forward driving direction). The recording area of the third camera C3 covers the area behind the vehicle 1 and the recording area of the fourth camera C4 covers the area to the left of the vehicle 1 (viewed in forward driving direction). It should be noted that the vehicle may comprise more or less than four cameras.

As shown in Fig. 1, the recoding areas of cameras C1, C2, C3, C4 overlap which leads to overlapping regions O. The environment area covered by an overlapping region O is captured by at least two adjacent cameras. In the present example, the overlapping regions O are located in corner regions of the vehicle 1. For example, the front, right-hand corner of the surroundings of the vehicle 1 is an overlapping region O in which the recording areas of the front camera C1 and the right camera C2 overlap.

For avoiding artifacts and texture inconsistencies, the vehicle 1 performs an improved sampling technique which tries to arrange the sampling grid used for capturing image samples for image harmonization in a free space area FS, i.e. in an area which is not covered by an object, preferably which comprises a homogenous texture, for example a homogenous road area.

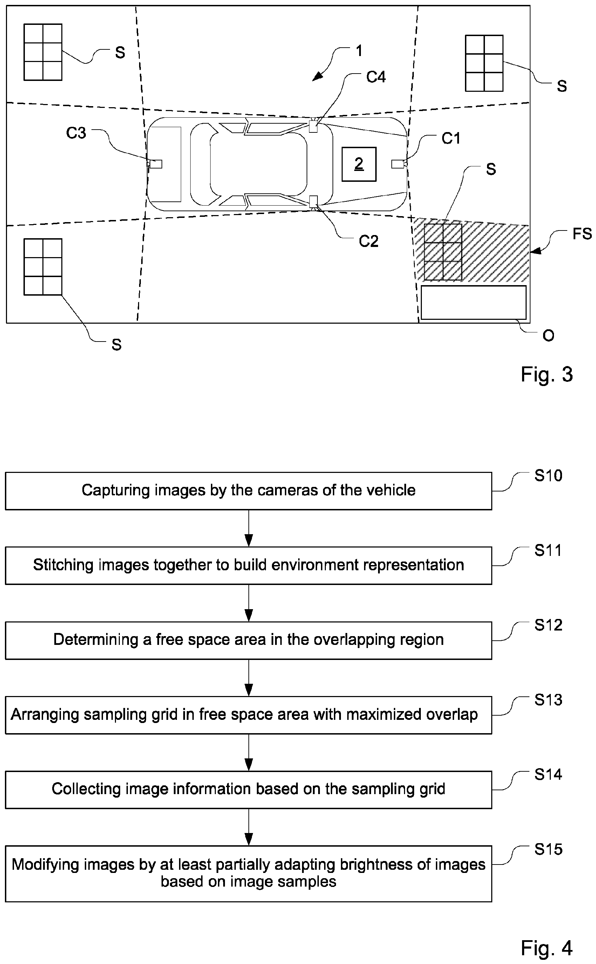

Said improved sampling technique is disclosed in closer detail based on Fig. 2 and 3.

First, the cameras C1 - C4 capture images of the surrounding of the vehicle 1. Thereby separate images are obtained, each image showing the surroundings of the vehicle 1 in the recoding area of the respective camera.

Said images are stitched together to obtain a composite image. The composite image may be, for example, a 360° surround view image. The 360° surround view image may be presented in a top view (bird's-eye-view) or may be projected onto a bowl-shaped surface in order to obtain a perspective view of the environment with the vehicle 1 in the centre of the bowl.

The brightness of the images provided by the cameras may vary because of different factors, e.g. because of different camera settings, varying lighting conditions and/or individual camera limitations in capturing images in dynamic scenarios. This leads to differences in brightness of the images in the overlapping regions.

In order to harmonize the images to be stitched and perform brightness correction, a sampling grid S is used. Initially, the sampling grid S is positioned in the overlapping region O in a fixed manner, randomly or based on heuristics.

As shown in Fig. 2, by said initial positioning, the sampling grid S may be placed at least partially on a non-free space area, i.e. an area which is occupied by an object 3 etc. Such placement of the sampling grid S may lead to poor brightness correction because the image samples selected based on the sampling grid show different features and textures because of at least partly capturing samples of the object, respectively the non-free space area. For example, if the object O shown in Fig. 2 is a dustbin, the sampling grid S may capture samples which refer to the dustbin and samples which do not refer to the dustbin. This leads to sample inconsistencies which worsen the brightness correction.

In order to improve the brightness correction result, the vehicle uses an adaptive placement of sampling grid S depending on the texture of the environment in the overlapping region O. For example, the control unit 2 may receive information from an entity regarding the free space area FS in said overlapping region O. The entity may be, for example, a semantic segmentation module which provides semantic segmentation information at least to the image portions being arranged in the overlapping region O.

Based on said information, the control unit 2 of the vehicle 1 may check if the initially placed sampling grid S is arranged completely in the free space area FS. If not, the sampling grid S may be shifted in order to find a placement in which the sampling grid S is completely located in the free space area FS. If it is not possible to find such position, it is tried to increase the portion of the sampling grid S which lies within the free space area FS, i.e. minimizing the portion of the sampling grid S being located outside the free space area FS. The result of such replacement is shown in Fig. 3. Compared to Fig. 2, the sampling grid S has been shifted such that the sampling grid S is located completely in the free space area FS.

After repositioning the sampling grid S, samples at least referring to the brightness are taken from each image based on the sampling grid S. More in detail, in the present embodiment, samples are taken from the image captured by the camera C1 and the image captured by the camera C2. Based on said samples, image harmonization, specifically brightness correction is executed. In addition, also alpha blending may be carried out. Said brightness correction may use linear interpolation or another harmonization function in order to adjust image information provided by different cameras in order to obtain a harmonized composite image.

Fig. 4 shows a schematic block diagram showing the steps of a method for generating a representation of the environment surrounding a vehicle 1.

First, images are captured by the cameras of the vehicle (S10). The images are captured from different camera positions but partly overlap.

Said images are stitched together to build a composite image. The composite image comprises at least one overlapping region in which a portion of an image provided by a first camera overlaps with a portion of an image provide by a second camera (S11).

In a further step, a free space area is determined in the overlapping region (S12). Said free space area can be determined in the composite image or in the single images provided by the cameras before stitching.

The sampling grid is arranged in the free space area such that the overlap between the sampling grid and the free space area is maximized (S13).

After final placement of the sampling grid, image information is collected from the images provided by the first and second camera in the overlapping region based on the sampling grid, thereby obtaining image samples (S14).

Finally, the images provided by the first and second cameras are modified by at least partially adapting the brightness of the images based on the image samples (S15).

It should be noted that the description and drawings merely illustrate the principles of the proposed invention. Those skilled in the art will be able to implement various arrangements that, although not explicitly described or shown herein, embody the principles of the invention.

### List of reference numerals

- 1: vehicle
- 2: control unit
- 3: object

- C1, C2, C3, C4: camera
- FS: free space area
- O: overlapping region
- S: sampling grid

## Claims

1. Computer-implemented method for generating a representation of the environment surrounding a vehicle (1) based on images provided by multiple cameras (C1, C2, C3, C4) of the vehicle (1), the cameras (C1, C2, C3, C4) being arranged at the vehicle (1) in a distributed manner such that the recording areas of neighboring cameras (C1, C2, C3, C4) at least partially overlap, the method comprising the steps of:
- Capturing images by the cameras (C1, C2, C3, C4) of the vehicle (1) (S10);
- Stitching the images together to build a composite image, wherein the composite image comprises at least one overlapping region (O) in which a portion of an image provided by a first camera (C1) overlaps with a portion of an image provided by a second camera (C2) (S11);
- Determining a free space area (FS) in the overlapping region (O) (S12);
- Arranging a sampling grid (S) in the free space area (FS) such that the overlap between the sampling grid (S) and the free space area (FS) is maximized (S13);
- Collecting image information from the images provided by the first and second camera (C1, C2) in the overlapping region (O) based on the sampling grid (S), thereby obtaining image samples (S14);
- Modifying the images provided by the first and second cameras (C1, C2) by at least partially adapting the brightness of the images based on the image samples (S15).

2. Method according to claim 1, wherein the free space area (FS) is determined based on semantic segmentation.

3. Method according to claim 1 or 2, wherein the free space area (FS) is determined separately for images of first and second camera (C1, C2).

4. Method according to any one of the preceding claims, wherein the step of arranging the sample grid (S) comprises an initial placement of the sampling grid (S) in the overlapping region (O).

5. Method according to claim 4, wherein after initial placement, it is checked if the sampling grid (S) is completely located in the free space area (FS) and, if not, the portion of the sampling grid (S) lying in the free space area (FS) is maximized.

6. Method according to claim 4 or 5, wherein, after the initial placement of the sampling grid (S) in the overlapping region (O), the step of arranging the sampling grid (S) comprises shifting the sampling grid (S) in the overlapping region (O) in order to minimize the portion of the sampling grid (O) outside the free space area (FS).

7. Method according to any one of the preceding claims, wherein the image samples include brightness information of image pixel covered by the sampling grid (S).

8. Method according to any one of the preceding claims, wherein the image samples include alpha values associated to the image pixels covered by the sampling grid (S), said alpha values being numeric values indicating the transparency of the image pixels.

9. Method according to any one of the preceding claims, wherein the step of modifying the images comprises alpha-blending.

10. System for generating a representation of the environment surrounding a vehicle (1), the system comprising multiple cameras (C1, C2, C3, C4) for capturing images of the environment surrounding the vehicle (1) and a control unit (2) configured to generate a representation of the environment based on the captured images, the system being configured to perform the following steps:
- Capturing images by the cameras (C1, C2, C3, C4) of the vehicle (1);
- Stitching the images together to build a composite image, wherein the composite image comprises at least one overlapping region (O) in which a portion of an image provided by a first camera (C1) overlaps with a portion of an image provided by a second camera (C2);
- Determining a free space area (FS) in the overlapping region (O);
- Arranging a sampling grid (S) in the free space area (FS) such that the overlap between the sampling grid (S) and the free space area (FS) is maximized;
- Collecting image information from the images provided by the first and second camera (C1, C2) in the overlapping region (O) based on the sampling grid (S), thereby obtaining image samples;
- Modifying the images provided by the first and second cameras (C1, C2) by at least partially adapting the brightness of the images based on the image samples.

11. System according to claim 10, wherein the system comprises at least four cameras (C1, C2, C3, C4) for capturing the environment surrounding of the vehicle (1) and the composite image is a 360° surround view.
